# EUROPÄISCHE PATENTSCHRIFT

(11) **EP 3 012 082 B1**
(45) Veröffentlichungstag und Bekanntmachung des Hinweises auf die Patenterteilung: **22.03.2017**
(21) Anmeldenummer: 15179019.3
(22) Anmeldetag: 30.07.2015
(51) Int. Cl.: B29C 45/16, B65D 1/24, B29C 45/14

(54) **FLASCHENKASTEN IN ZWEI-KOMPONENTEN-BAUWEISE**
BOTTLE CRATE IN TWO COMPONENT CONSTRUCTION
CAISSES A DEUX COMPOSANTS

(30) Priorität: 02.10.2014 DE 102014114325
(43) Veröffentlichungstag der Anmeldung: 27.04.2016
(73) Patentinhaber: Schoeller Allibert GmbH, 19057 Schwerin (DE)
(72) Erfinder: Barth, Christian, 82049 Pullach (DE); Fetzer, Martin, 81543 München (DE)
(74) Vertreter: Bockhorni & Kollegen

(56) Entgegenhaltungen:
- EP-A2- 1 431 193
- DE-A1-102007 018 358
- DE-U1- 20 320 695

## Beschreibung

Die Erfindung betrifft einen Kasten, insbesondere Flaschenkasten mit den Merkmalen des Oberbegriffs des Patentanspruches 1.

Kästen, insbesondere Flaschenkästen werden heute zumeist durch Spritzgießen aus Kunststoff, insbesondere einem thermoplastischen Kunststoff hergestellt, wobei sich die Erfindung auf einen solchen Kunststoffkasten bezieht. Derartige Kästen weisen üblicherweise vier Seitenwände und einen Kastenboden auf, wobei im Falle eines Flaschenkastens im Inneren des Kastens ein Gefache für die Einstellung von Flaschen ausgebildet bzw. angeordnet ist.

Seit einigen Jahren ist es beispielsweise aus DE 10 2007 018 358 A1 bekannt, derartige Kästen in Mehrkomponenten-Bauweise auszuführen, worauf sich wiederum die Erfindung bezieht. Insbesondere wird hierbei in Zwei-Komponenten-Bauweise zuerst ein Grundkasten bzw. Kastengrundkörper aus einem ersten Kunststoff in einem Werkzeug durch Spritzgießen hergestellt. Das Aufspritzen bzw. Anspritzen der zweiten Kunststoffkomponente erfolgt hierbei zumeist in einer zweiten Werkzeugform, in welche der aus dem ersten Kunststoff hergestellte Kastengrundkörper eingesetzt wird. Nach Schließen der Werkzeugform wird in die durch den Kastengrundkörper oder die Werkzeugform gebildete Ausnehmung der zweite Kunststoff eingespritzt und angeformt.

Zwar können das erste und zweite Kunststoffmaterial identisch sein, jedoch wird in der Mehrkomponenten-Bauweise in der Regel ein unterschiedlicher Kunststoff verwendet, wobei sich der erste Kunststoff vom zweiten Kunststoff zumeist in der Farbgebung oder auch in der Haptik unterscheidet, also entweder der eine Kunststoff härter oder der andere Kunststoff für das Griffverhalten weicher ausgebildet ist. Auch insoweit bezieht sich hierauf die Erfindung.

Brauereien und Getränkehersteller verkaufen sich heute auch über die Gestaltung des Kastens selbst, welches ein Markeninstrument darstellt, so dass auf das Design und das Aussehen derartiger Flaschenkästen hoher Wert gelegt wird, da über eine gelungene Kastengestaltung sich der Getränkehersteller im Markt gegenüber dem Kunden gut identifizieren lässt.

Eine wesentliche Maßnahme für die Marktakzeptanz ist hierbei der Name der Brauerei und des Herstellers, so dass sehr häufig versucht wird, den Schriftzug bzw. den Namen der Brauerei bzw. des Getränkeherstellers montiert auf dem Kasten selbst auszubilden. Hierzu eignet sich insbesondere die Kastenmitte oder der obere Kastenrand, insbesondere auch der Kastenhandgriff. Bei Mehrkomponenten-Bauweise wird hierbei häufig der Schriftzug als erhabenes und einstöckig mit dem Kastengrundkörper ausgebildetes Relief gestaltet, welches dann in einem zweiten Schritt mit der zweiten, zumeist unterschiedliche gefärbten Kunststoffkomponente umspritzt wird. Dadurch ergibt sich ein prägnantes Aussehen eines solchen Schriftzuges. Allerdings treten beim Anspritzen des zweiten Kunststoffs immer dann Probleme auf, wenn das erhabene Relief insgesamt einen Abschnitt eines graphischen Bestandteils, etwa eines Buchstabens, umschließt und inselartig gegenüber den, anderen Bereichen abtrennt. Dies macht es erforderlich, diese inselartige Ausgestaltung eines graphischen Bestandteils dann von der anderen Seite her anzuspritzen, so dass dieser inselartige Abschnitt, der vom Relief eingeschlossen ist, ebenso mit dem zweiten Kunststoff gefüllt werden kann. Bei dieser Flaschenkastengestaltung mit einem Schriftzug nur an einer Seite ergibt sich über die erforderlichen Verbindungskanäle, dass auf der dem Schriftzug gegenüberliegenden Seite die Randbereiche nicht sehr dekorativ sind, so dass in der Regel zusätzliche Maßnahmen erforderlich sind, um hier beispielsweise durch entsprechende Nachfärbung oder Nachbearbeitung für einen Farbangleich oder dergleichen zu sorgen.

Aus EP 1 431 193 A2 ist ein Flaschenkasten mit einem negativen Relief in Form von Sichtfenstern im Griff bekannt, wobei die Sichtfenster von einem zweiten Kunststoff gefüllt werden. Auch der so hergestellte Flaschenkasten weist nur teilweise ein hochwertiges Erscheinungsbild auf.

Der Gegenstand des Anspruchs 1 unterscheidet sich vom Kasten des EP 1 431 193 insbesondere dadurch, dass er ein Querschnitt von mindestens einer Kastenseitenwand ein Doppel-T-Formprofil aufweist.

Aufgabe der Erfindung ist es, hier Abhilfe zu schaffen und einen Kasten, insbesondere Flaschenkasten zu konzipieren, mit dem sich solche Nachteile einer beispielsweise Schriftzuggestaltung vermieden werden können, einfach in der Herstellung ist, ein optische gefälliges Aussehen bietet und ein Nacharbeiten entbehrlich macht. Zugleich soll ein stabiler Aufbau im Bereich des angespritzten Kunststoffes bei der Zwei-Komponenten-Bauweise gewährleistet werden.

Diese Erfindung wird durch die Maßnahmen des Anspruchs 1 gelöst, wobei zweckmäßige Weiterbildungen und Ausgestaltungen der Erfindung durch die in den Unteransprüchen enthaltenen Merkmale gekennzeichnet sind.

Die Erfindung geht den überraschenden Weg, dass ein Relief nicht nur auf einer Seite, sondern auf beiden Seiten des Kastengrundkörpers vorgesehen ist und zwar in Ausrichtung zueinander, insbesondere in überlappender Anordnung. Hierbei werden inselartige Bereiche, die von einem Relief komplett umschlossen sind, mittels Überbrückungskanälen mit der gegenüberliegenden Wandseite des Kastengrundkörpers verbunden und hierbei durch die überlappende Anordnung des dort vorgesehenen zweiten Reliefs derart blockierfrei gehalten, dass ein Durchtritt der Kunststoffschmelze des zweiten Kunststoffes möglich ist. Durch das Anspritzen auf der gegenüberliegenden Seite wird damit in einfacher Weise der inselartige Ausschnitt auf der anderen Seite gefüllt, ohne dass irgendein Nacharbeiten erforderlich wäre. Zugleich ergibt sich in Folge der erhabenen Reliefausbildung innerhalb des zweiten Werkzeugs, in welche regelmäßig der aus dem ersten Kunststoff durch Spritzgießen hergestellte Kastengrundkörper umgesetzt wird, ein guter Stützeffekt gegenüber der zweiten Werkzeugform, so dass unter dem Druck der eingespritzten zweiten Kunststoffschmelze kein Verschieben mehr stattfindet bzw. ausgeschlossen wird, das heißt die Konturen in ihrer Lage verbleiben. Dies führt zu einer trennscharfen Ausbildung der durch Zwei-Komponenten-Bauweise hergestellten Schriftzüge, Symbole, Ornamente oder dergleichen Hinweise auf einem Flaschenkasten. Dies ist sehr wesentlich, weil insbesondere derartige Hinweise für den Hersteller auf dem Flaschenkasten sehr wichtig sind und prägnant gestaltet werden müssen, ohne dass ein Überfließen oder dergleichen stattfinden würde.

Der eingespritzte zweite Kunststoff umschließt hierbei vollständig das erhabene Relief von der Seite her, so dass ein trennscharfer Übergang vom ersten zum zweiten Kunststoff und damit eine prägnante Abbildung des Schriftzugs gewährleistet wird.

Zugleich ergibt sich hierdurch eine stabile Verankerung des zweiten Kunststoffs mit dem Kunststoffgrundkörper. Das Relief selbst kann natürlich beliebig gestaltet sein, jedoch ist es bevorzugt, dass das Relief zumindest teilweise aus graphischen Bestandteilen, insbesondere Buchstaben zur Bildung eines Schriftzuges ausgebildet ist. Eine Beschränkung auf einen oder mehrere Schriftzüge ist hierbei nicht gegeben, vielmehr lässt sich dieses Konzept auch auf andere graphische Gestaltungen, etwa Bildgestaltungen und dergleichen, wie etwa Wappen anwenden. Dies wird ausdrücklich mit einbezogen.

Erfindungsgemäß wird das erhabene Relief in einer von Schultern begrenzten Ausnehmung angeordnet, in welche der zweite Kunststoff eingespritzt wird. Erfindungsgemäß vorsteht das Relief vom Boden der Ausnehmung nach außen.

Für eine glatte Außenfläche, wie sie heute bei Flaschenkästen angestrebt wird, kann in einfacher Weise dadurch Gewähr getragen werden, indem die die Ausnehmung begrenzenden Schultern und die das Relief bildenden erhabenen stegartigen Rippen gleiche Höhe aufweisen, so dass nach Anlage der Werkzeugform an diese Schultern bzw. stegartigen Rippen ein geschlossener Hohlraum geformt wird, in den der zweite Kunststoff eingespritzt wird, womit sich eine ebene und bündige Außenfläche in einfacher Weise erreichen lässt.

Zweckmäßigerweise ist die Ausnehmung wandartig in Längsrichtung der Seitenwand ausgebildet und kann sich optional von einem Eckbereich zum anderen erstrecken, bildet insbesondere den Handgriff eines Flaschenkastens, und kann bedarfsweise aber auch umlaufend oder aber auch in Höhe der Kastenmitte oder am unteren Kastenrand vorgesehen sein.

Wesentlich ist die Platzierung der Reliefs auf beiden Seiten des Kastengrundkörpers, insbesondere auch aufgrund der damit verbundenen Stützfunktion in der zweiten Werkzeugform. Wesentlich ist hierbei ferner, dass trotz der Anordnung eines Reliefs auf beiden Seiten in überdeckender Anordnung die Durchlasskanäle für den Schmelztransport des zweiten Kunststoffs für die Durchleitung blockierfrei gehalten werden. Entsprechend werden die Reliefs zueinander ausgerichtet. Führt ein Überbrückungskanal von einer Wandseite des Kastengrundkörpers mit einem erhabenen Relief zur gegenüberliegenden Wandseite des Kastengrundkörpers für das Aufspritzen des zweiten Kunststoffs, so ist jedenfalls der Buchstabe so angeordnet, dass dieser nicht die Verbindungsöffnung des Überbrückungskanals blockiert, vielmehr erfolgt die Anordnung so, dass ein Durchlass der Schmelze beim Anspritzen der zweiten Kunststoffkomponente möglich ist.

Besonders zweckmäßig ist die Anordnung von Versteifungsrippen auf einer Seite des Kastengrundkörpers, wobei die Rippen vorzugsweise als längs verlaufende Rippen parallel zum Kastenrand bzw. Kastenboden ausgebildet sind. Ferner ist es zweckmäßig, wenn das erhabene Relief an den Längsrippen einstückig angeformt ist, so dass sich hinter dem erhabenen Relief Hinterschneidungen für den Schmelztransport bilden, die auch zum Befüllen eines vertieften Reliefs auf der anderen Seite des Kastengrundkörpers herangezogen werden können.

Nachfolgend werden Ausführungsbeispiele der Erfindung anhand von Zeichnungen schematisch beschrieben. Darin zeigen
- **Fig. 1**: eine perspektivische Ansicht einer Ausführungsform eines Flaschenkastens
- **Fig. 2**: eine geschnittene Teilansicht des Flaschenkastens nach Fig. 1
- **Fig. 3**: eine Teilansicht eines Kastengrundkörpers zum Aufspritzen eines zweiten Kunststoffes für den aus Fig. 1 ersichtlichen Handgriff
- **Fig. 4**: eine Schnittansicht längs der Linie D - D in Fig. 3 (in perspektivischer Ansicht)
- **Fig. 5**: eine Teilansicht desselben Kunststofftragkörpers aus erstem Kunststoff wie Fig. 3, jedoch in Ansicht von der gegenüberliegenden Seite
- **Fig. 6**: einen Teilschnitt längs der Linie C - C von Fig. 5, wiederum in perspektivischer Darstellung
- **Fig. 7**: eine Teilansicht des Kastengrundkörpers nach Fig. 3 mit aufgespritzten zweiten Kunststoff
- **Fig. 8**: eine Schnittansicht längs der Linie A - A von Fig. 7
- **Fig. 9**: eine entsprechende Schnittansicht, jedoch in perspektivischer Darstellung
- **Fig. 10**: eine Ansicht des Kunststofftragkörpers entsprechend Fig. 7, also mit aufgespritztem zweiten Kunststoff, jedoch in Ansicht der gegenüberliegenden Wandseite
- **Fig. 11**: eine Schnittansicht längs der Linie B - B von Fig. 10
- **Fig. 12**: eine entsprechende Schnittansicht, jedoch in perspektivischer Darstellung
- **Fig. 13**: eine Schnittansicht durch einen Handgriff gemäß Fig. 7, jedoch mit einem Schnitt durch den graphischen Bestandteil "o" des Schriftzuges Schoeller
- **Fig. 14**: eine Schnittansicht durch den Handgriff mit einer Schnittlinie senkrecht zum Schnitt nach Fig. 13
- **Fig. 15**: eine Ansicht des Kastengrundkörpers für den vorstehenden Handgriff zur Darstellung der beidseitigen Reliefanordnung in Überlappungsstellung
- **Fig. 16**: eine Teilansicht einer Aus führungs form die nicht ein Teil der Erfindung ist, in Draufsicht und zwar eines Handgriffes, bei dem auf der in der Fig. 16 dargestellten Seite ein erhabenes Relief des Kastengrundkörpers aus erstem Kunststoff vorliegt
- **Fig. 17**: eine Ansicht der gegenüberliegenden Seite dieses Ausführungsbeispiels
- **Fig. 18**: eine Ansicht des Kastengrundkörpers dieser Ausführungsform nach den Fig. 16 und 17, sowie
- **Fig. 19**: eine Längsschnittansicht in perspektivischer Darstellung durch einen Handgriff Gemäß der Ausführungsform nach den Fig. 16-18.

Da es sich um eine Zwei-Komponenten-Bauweise eines Flaschenkastens in den beschriebenen Ausführungsbeispielen handelt, bei dem die beiden Kunststoffkomponenten vorzugsweise mit unterschiedlicher Farbgebung gestaltet sind, sind die Figurendarstellungen teilweise in Grautönen gehalten, so dies zur Differenzierung der beiden Materialien erforderlich und damit für das Verständnis der Erfindung zweckmäßig ist.

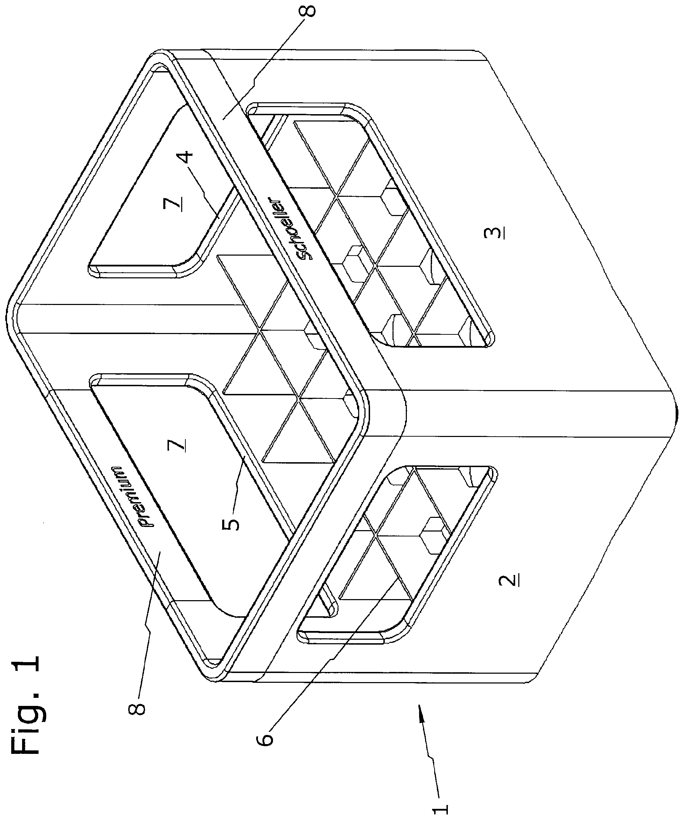

Fig. 1 zeigt eine perspektivische Ansicht eines Flaschenkastens 1, der üblicherweise vier Seitenwände 2 - 5 und einen Kastenboden mit einem darauf angeordneten Gefache 6 für die Flaschenaufnahme aufweist. Ferner weist der Kasten 1 rein optional vier Öffnungen 7 auf und zwar jeweils eine Öffnung 7 in den Seitenwänden 2 - 5, wodurch oberhalb der Öffnungen 7 und damit am oberen Kastenrand jeweils Handgriffe 8 gebildet werden.

Wie Fig. 1 zeigt, sind die oberen Kastenränder der beiden gegenüberliegenden Seitenwände 3 und 5, hier optional die Handgriffe 8, beidseitig mit einem Schriftzug versehen und zwar auf der Außenseite hin mit dem Schriftzug Schoeller und an der Innenseite mit dem Schriftzug Premium, sodass also die Handgriffe der beiden Seitenwände 3 und 5 beidseitig jeweils mit einem Schriftzug versehen sind. Ebenso gut können natürlich auch die anderen Handgriffe entsprechend gestaltet sein.

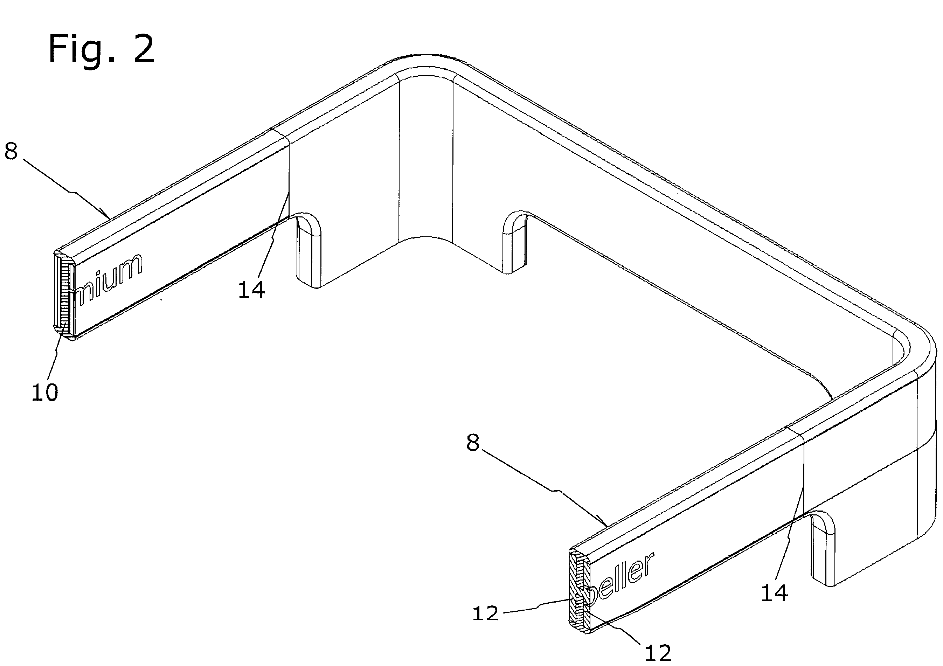

Aus Fig. 2 geht ein Schnitt durch die Handgriffe 8 hervor, sodass das Innenleben der Handgriffe ersichtlich ist. Hierbei zeigt Fig. 2 in den Schnittansichten mit 10 einen Kastengrundkörper des Kastens 1, der durch Spritzgießen aus einem ersten Kunststoffmaterial hergestellt ist. Dieser Kastengrundkörper 10 stellt den Grundkörper des Flaschenkastens 1 dar, auf den in bestimmten Bereichen ein zweiter Kunststoff 12 beidseitig aufgespritzt ist und zwar hier rein optional nur im Bereich der Handgrifföffnungen bis zur Trennlinie 14, die durch eine Trennschulter gebildet sein kann. Optional könnte sich allerdings die Zwei-Komponentengestaltung des Handgriffes auch am oberen Kastenrand über den gesamten Umfang erstrecken, wobei der Rest des Kastens durch den Kastengrundkörper aus dem ersten Kunststoff gebildet ist und gegebenenfalls zusätzlich in Mehrkomponenten-Bauweise ausgeführt sein kann.

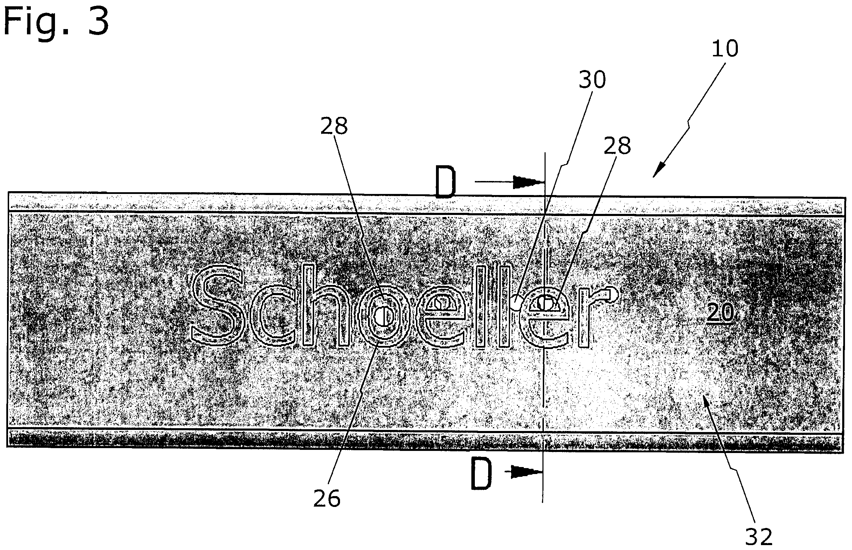

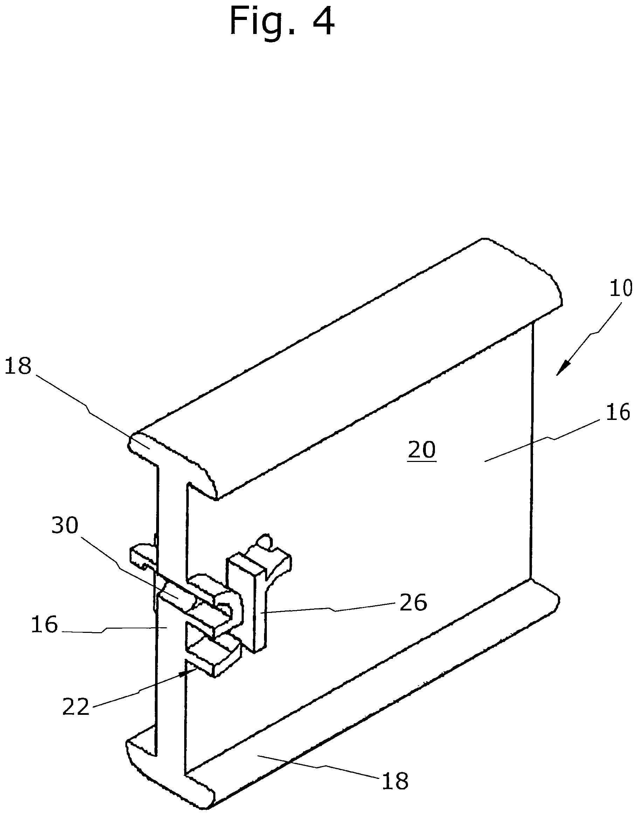

Die Fig. 3 - 5 zeigen den Kastengrundkörper 10 im Bereich des Handgriffes 8 in Teilansicht. Entsprechend der Fig. 4 weist der Kastengrundkörper im Schnitt durch den Handgriff eine Doppel-T-Profilform auf mit einem zentralen Steg 16 und beidseitig an den Enden vorstehenden Stegschenkeln 18, sodass zwischen den Stegschenkeln 18 eine Ausnehmung 20 begrenzt ist, die zur Aufnahme des zweiten Kunststoffmaterials 12 dient, welches dort angespritzt wird.

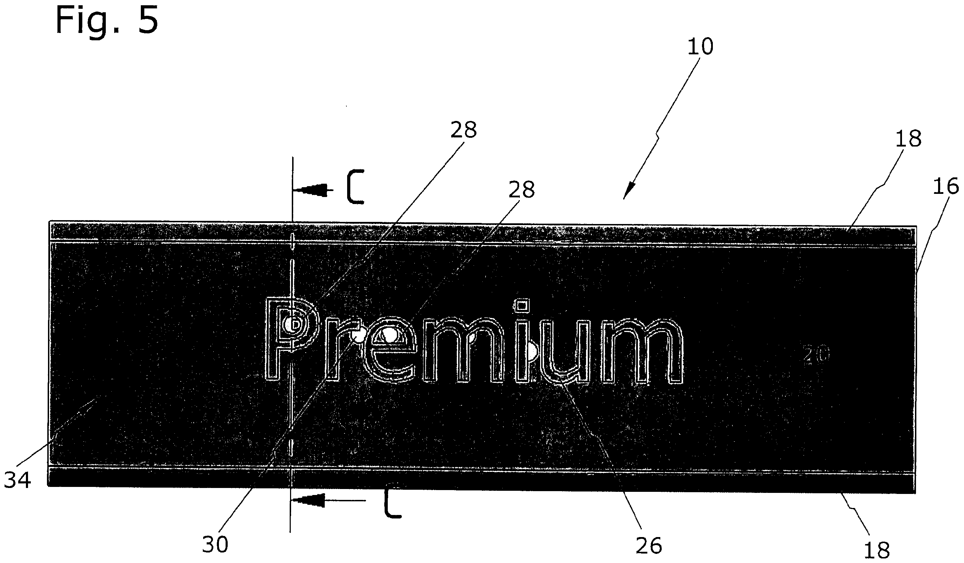

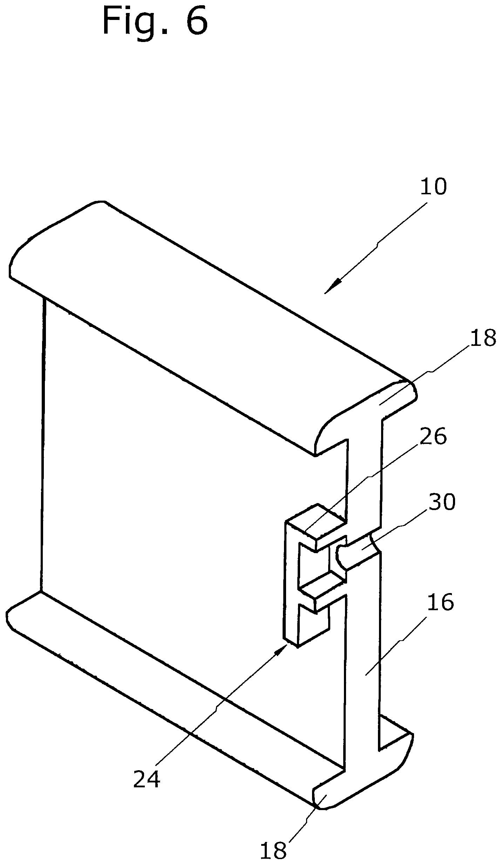

Vom Boden der Ausnehmung 20 steht ein erhabenes Relief vor, welches auf der Außenseite allgemein mit dem Bezugszeichen 22 und auf der Innenseite mit dem Bezugszeichen 24 bezeichnet ist (vgl. Fig. 6). Diese beiden erhabenen Reliefs 22 und 24, die beidseitig des zentralen Stegs 16 nach außen hin vorstehen, stellen sich vorzugsweise aus graphischen Bestandteilen, hier in Art von Schriftzügen, dar, nämlich optional auf der Außenseite mit dem Schriftzug Schoeller und auf der Innenseite (Fig. 5) mit dem Schriftzug Premium. Hierbei sind die Buchstaben der beiden Schriftzüge und damit die erhabenen Reliefs durch vorstehende stegartige Rippen 26 gebildet. Die Höhe der rippenartigen Stege 26 entspricht im dargestellten Ausführungsbeispiel der Höhe der vom zentralen Steg 16 vorkragenden Stegschenkeln 18, die Begrenzungsschultern der Ausnehmung 20 bilden. In diese dergestalt bestimmte Ausnehmung 20 auf beiden Seiten des Handgriffes 8 bzw. des Kunststoffgrundkörpers aus erstem Kunststoff 10 wird beidseitig der zweite Kunststoff angespritzt, der vorzugsweise gegenüber dem ersten Kunststoff eine unterschiedliche Färbung bzw. Farbgebung aufweist.

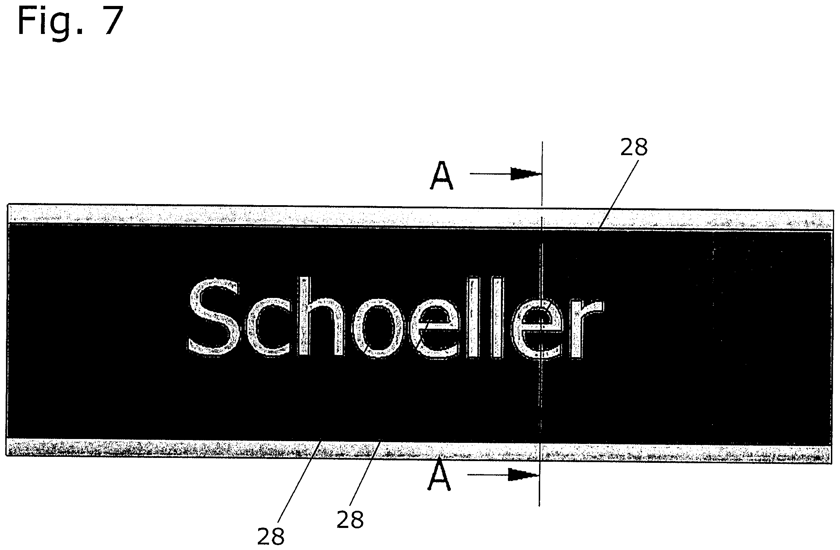

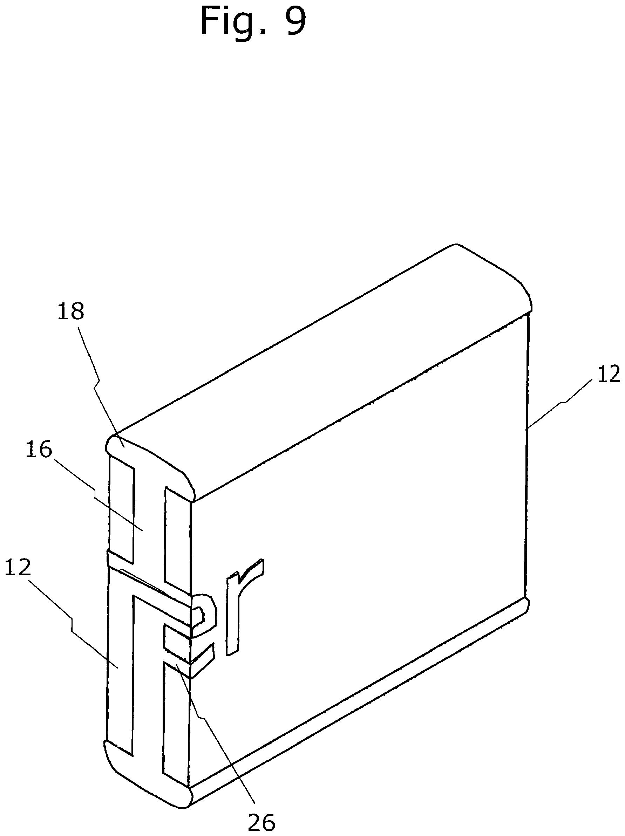

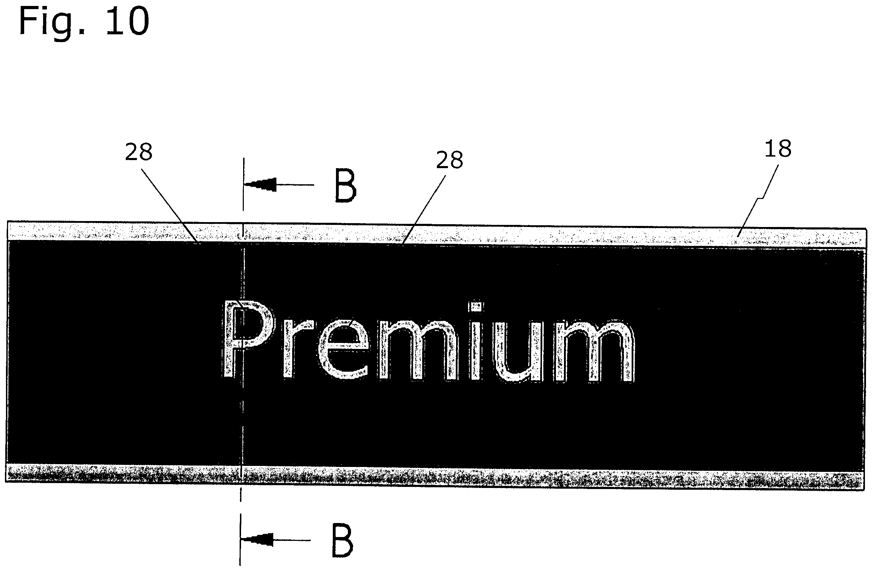

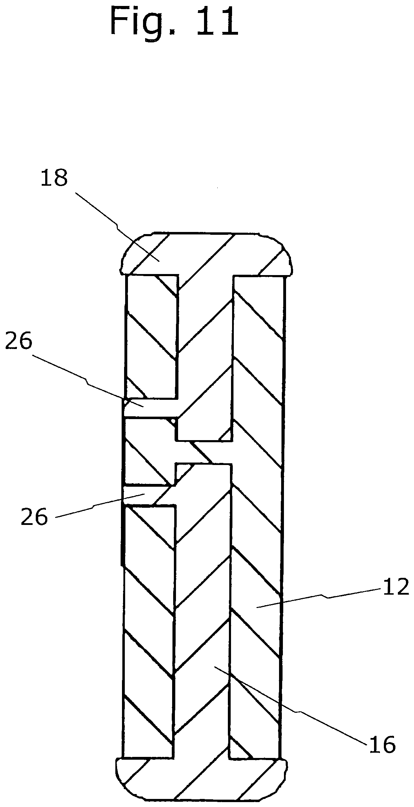

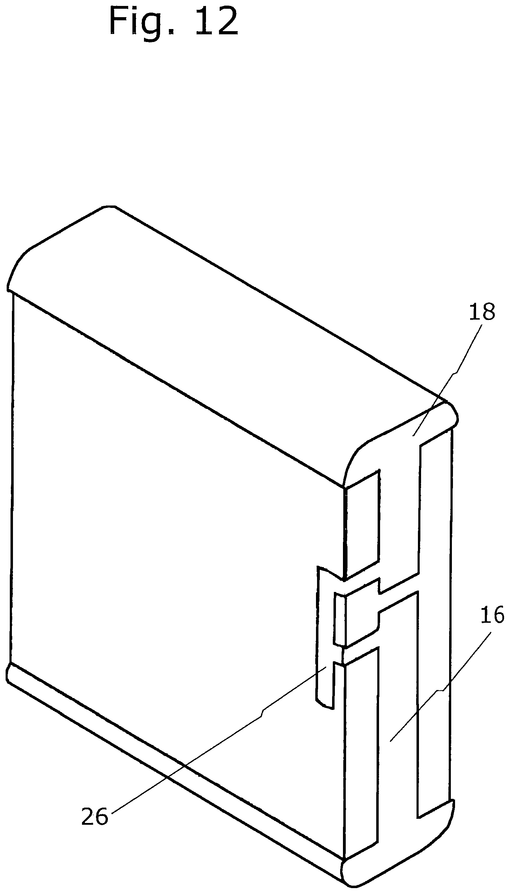

Hierzu wird der aus dem ersten Kunststoff gebildete Kastengrundkörper 10 nach dem Spritzgießen in an sich bekannter Weise in eine zweite Werkzeugform umgesetzt, wobei die Werkzeugwände nach Schließen der Form im Bereich des Handgriffes an den Enden der Stegschenkel 18 und den Rippen 26 anliegen, sodass im Bereich der beidseitigen Ausnehmungen 20 ein Hohlraum zwischen Formwand und Kastengrundkörper gebildet wird, in den dann wiederum in an sich bekannter Weise schmelzflüssiger Kunststoff eingespritzt wird, wie aus den Darstellungen der Fig. 7 bis 12 hervorgeht. Zweckmäßigerweise erfolgt ein Anspritzen des Kunststoffs von beiden Seiten der Seitenwand her.

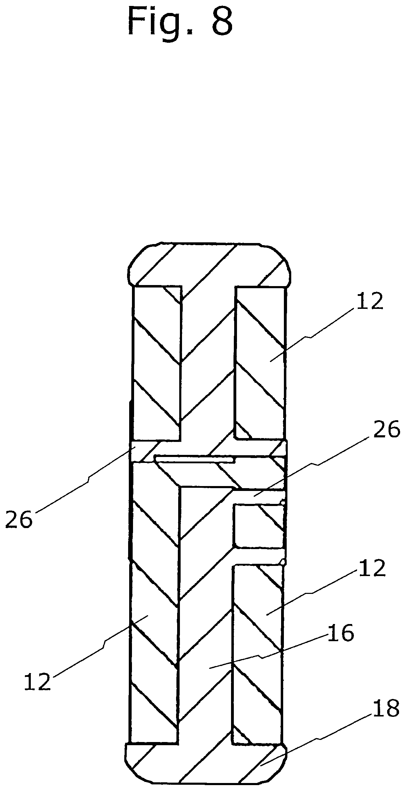

Problematisch sind hierbei diejenigen Bereich des Reliefs, hier Schriftzug, die vollständig vom erhabenen Relief umrandet sind und damit sozusagen eine geschlossene Insel bilden. Im Falle des Schriftzugs Schoeller betrifft dies die Buchstaben "o" und "e" wobei die vom Relief komplett umrahmten inselartigen Abschnitte mit 28 bezeichnet sind (Fig. 3 und 5). Im Falle der gegenüberliegenden Seite sind dies beim Schriftzug Premium die Buchstaben "P" und "e". Wird beispielsweise der zweite Kunststoff an der Außenseite über eine Öffnung der entsprechenden Werkzeugform eingespritzt, dann umgibt er das erhabene Relief komplett und zwar ohne jedweden Trennspalt zum erhabenen Relief und den Begrenzungsschultern der Aufnahme mit Ausnahme der in sich geschlossenen Abschnitte 28. Um diese Abschnitte 28 mit dem zweiten Kunststoff auszufüllen, wäre es erforderlich, dass der zweite Kunststoff von der anderen Seite her eingespritzt wird. Nach Maßgabe der Ausführungsform nach den Figuren 2 bis 14 wird deswegen auch auf der gegenüberliegenden Seite ein Schriftzug als erhabenes Relief, hier der Schriftzug Premium, vorgesehen, wobei, wie Fig. 4 beispielsweise ausweist, über einen Überbrückungskanal 30, der sich durch den zentralen Steg 16 erstreckt, die inselartigen Abschnitte 28 jeweils mit der gegenüberliegenden Seite derart verbunden sind, dass in Folge der Öffnung bzw. des Überbrückungskanals 30 der auf der anderen Seite aufgespritzte zweite Kunststoff 12 zur gegenüberliegenden Seite in die entsprechenden inselartigen Abschnitte 28 gelangt, sodass diese also auch komplett in einfacher Weise mit der zweiten Kunststoffkomponente gefüllt werden können. Aufgrund der gleichen Höhe der vorkragenden Stegschenkel 18 und der stegartigen Rippen 26 auf beiden Seiten des Kastengrundkörpers ergibt sich nach Einspritzen des zweiten Kunststoffes eine bündige Außenfläche auf beiden Seiten der entsprechenden Seitenwand bzw. des Handgriffes 8, wie aus den Fig. 8, 9 sowie 11 und 12 hervorgeht. Diese bündige Ausrichtung der zweiten Kunststoffkomponente ist allerdings nicht zwingend, vielmehr optional. Je nach Werkzeugformgestaltung kann der zweite Kunststoff 12 bedarfsweise auch rückspringend oder vorspringend innerhalb der Ausnehmung aufgenommen sein.

Jedenfalls lassen sich dadurch in einfacher Weise ohne großen Aufwand die inselartigen Abschnitte entsprechend mit dem zweiten Kunststoff komplett füllen, ohne dass dies von außen erkennbar ist. Wie die Fig. 7 - 12 zeigen, ist der zweite Kunststoff 12 spaltfrei in Bezug auf die Stegschenkel 18 bzw. Schultern und die stegartigen Rippen des erhabenen Reliefs eingespritzt und umkammert spaltfrei das erhabene Relief bzw. die Schriftzüge, hier Schoeller und Premium. Dadurch ergibt sich insgesamt auch eine stabile Verankerung der erhabenen Reliefs ebenso wie der zweiten Kunststoffkomponente auf dem Tragkörper. Zugleich ergibt sich eine trennscharfe Abbildung der beiden Schriftzüge, was auch aus ästhetischen Gründen erwünscht ist. Fernerhin stellen innerhalb der zweiten Werkzeugform für das Anspritzen der zweiten Kunststoffkomponente die Stegschenkel 18 und die stegartigen Rippen 26 der erhabenen Reliefs Stützglieder dar, die für eine Abstützung im Werkzeug sorgen, sodass keine Verschiebung aufgrund des Werkzeugdrucks nach dem Schließen der Form und beim Einspritzen der zweiten Kunststoffkomponente stattfinden kann, was für die trennscharfe Abbildung der Schriftzüge zweckmäßig ist.

In dem in den vorstehenden Figuren dargestellten Ausführungsbeispiel sind auf beiden Seiten des Kastengrundkörpers 10, nämlich auf der nach außen gerichteten Wandseite 32, die aus Fig. 3 hervorgeht, und der auf der in das Kasteninnere gerichteten Wandseite 34 die erhabenen Reliefs Schoeller bzw. Premium ausgebildet.

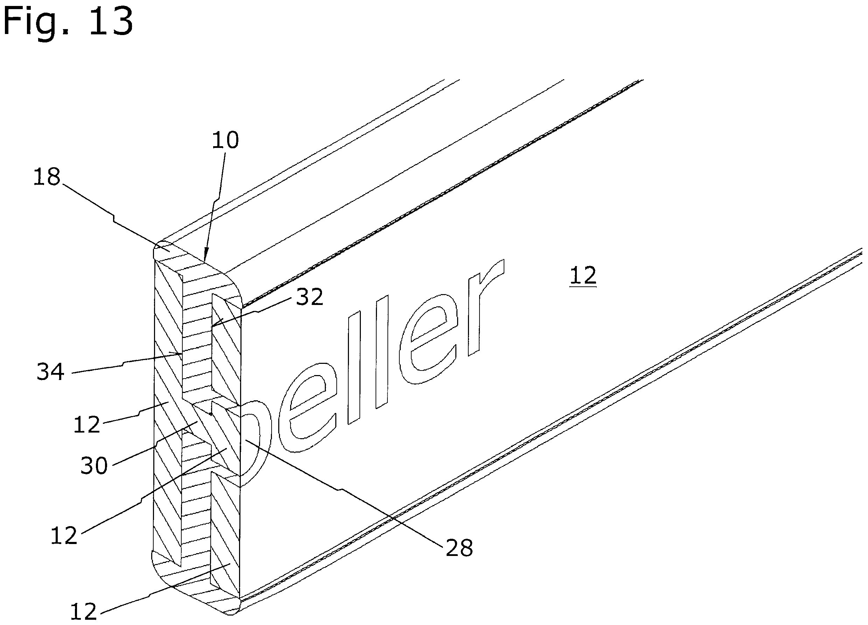

Fig. 13 zeigt eine Schnittansicht etwa in Mitte des Buchstabens "o" des erhabenen Reliefs bzw. Schriftzugs Schoeller und es geht sehr deutlich der von der Wandseite 32 des Kastengrundkörpers 10 zur anderen Wandseite 34 erstreckende Überbrückungskanal 30 hervor, der nach beidseitigem Anspritzen des zweiten Kunststoffmaterials natürlich ebenso mit dem zweiten Kunststoff gefüllt ist, sodass sich insgesamt im dargestellten Ausführungsbeispiel eine bezüglich des Handgriffs geschlossene Struktur und stabile Verankerung beider Reliefs ergibt. Die Schnittdarstellung nach Fig. 13 zeigt auch die trennscharfe und spaltfreie Füllung mit dem zweiten Kunststoff.

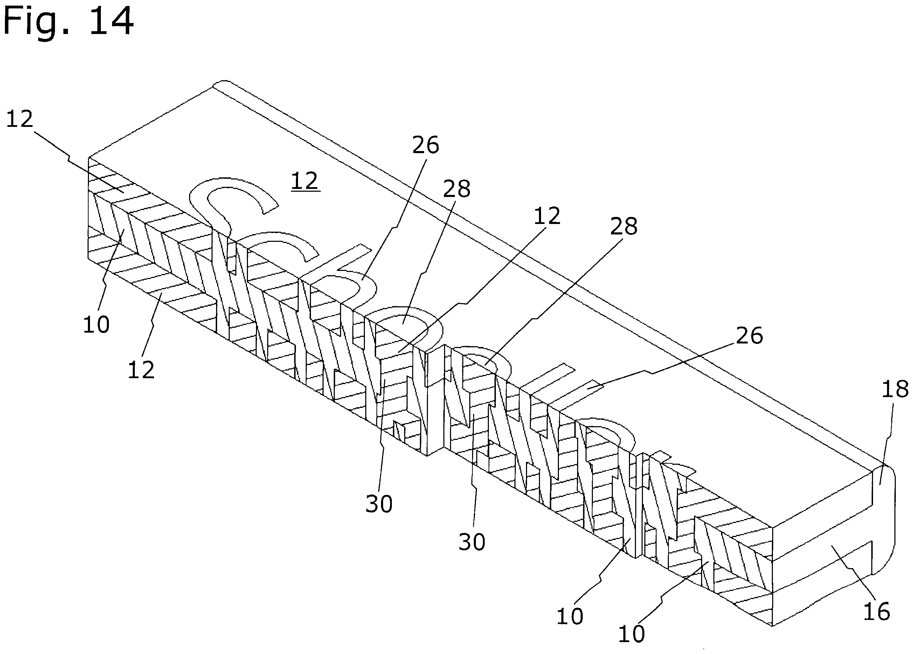

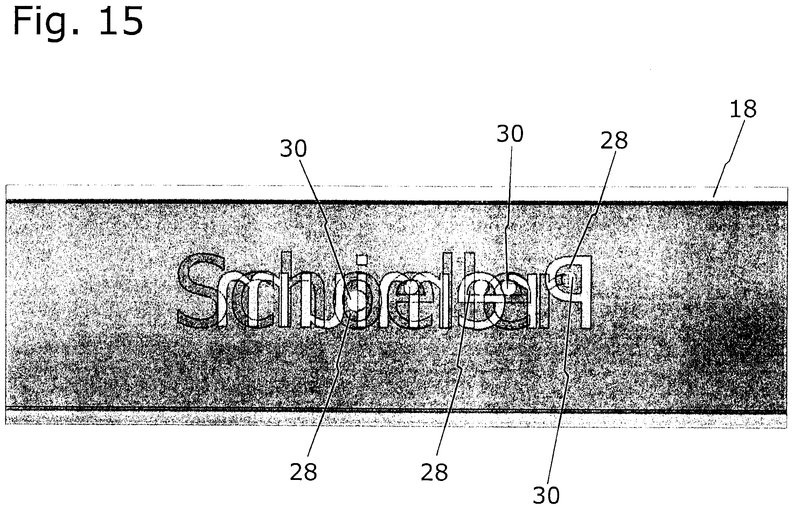

Die gegenseitige Ausrichtung der beiden erhabenen Reliefs auf beiden Seiten des Kastengrundkörpers 10 ergibt sich auch recht deutlich aus Fig. 14 ebenso wie die schmelzflussleitenden Verbindungen bzw. Überbrückungskanäle zu den inselartigen Abschnitten 30. Auch Fig. 15 zeigt sehr deutlich die entsprechende Überlappung infolge Ausrichtung der beidseitig angeordneten erhabenen Reliefs 22 und 24 sowie die Blockierfreiheit der Überbrückungskanäle 30 für die Verbindung der inselartigen Abschnitte 28. Dadurch ergibt sich insgesamt auch ein ästhetisch sauberes Erscheinungsbild der Schriftzuggestaltung.

Hierbei ist in diesem Zusammenhand anzumerken, dass im beschriebenen Ausführungsbeispiel beide erhabenen Reliefs durch jeweils einen Schriftzug gebildet sind, sodass sich also jedes Relief aus graphischen Bestandteilen, hier Buchstaben, zusammensetzt. Dies ist aber nur beispielhaft zu verstehen, da selbstverständlich auch andere Ornamente als graphische Bestandteile, Symbole, Zeichen oder dergl. je nach Wunsch möglich sind, sodass die dargestellten Ausführungsbeispiele in keiner Weise beschränkend sind.

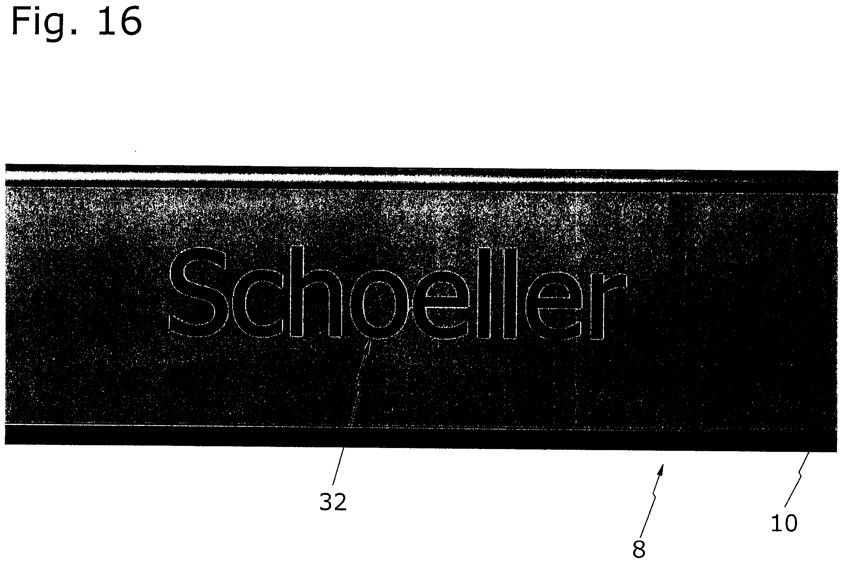

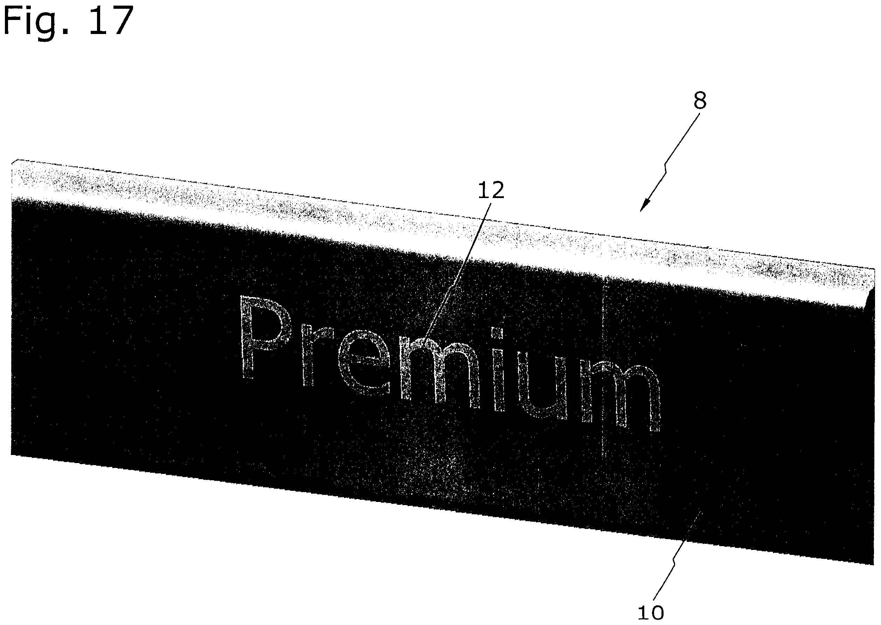

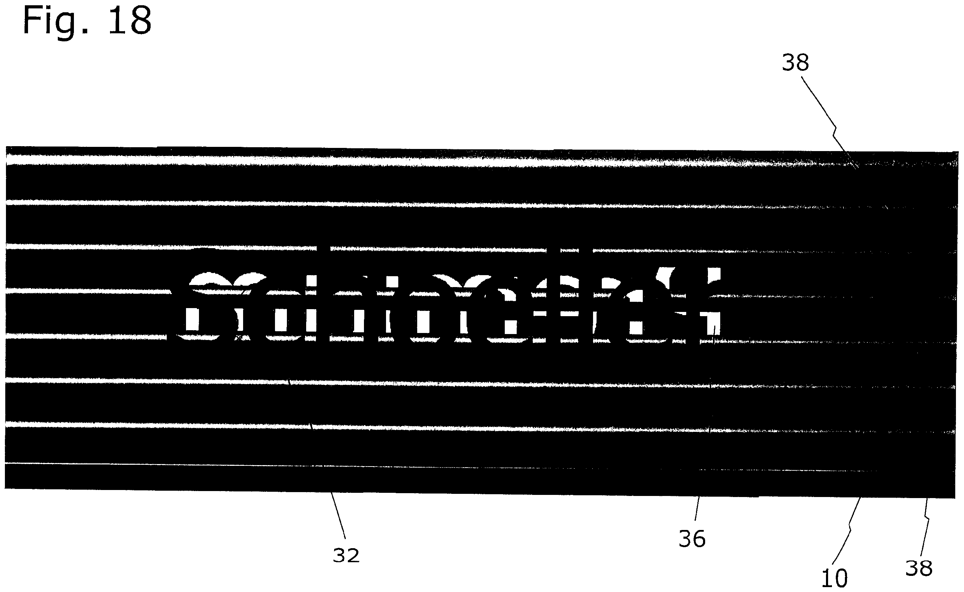

Die Figuren 16 - 18 zeigen eine weitere Ausführungsform des Flaschenkastens und zwar lediglich anhand der Darstellung eines der Handgriffe 8 des in Fig. 1 mit seinem Allgemeinaufbau dargestellten Flaschenkastens 1. Hierbei ist wiederum mit 10 der Kastengrundkörper bezeichnet, der aus dem ersten Kunststoff gebildet ist und hier alleine auf der Außenseite entsprechend Fig. 16 das erhabene Relief aus erstem Kunststoff, also den Schriftzug Schoeller, aufweist. Dieses erhabene Relief 32 ist ebenso wie im Falle der erhabenen Reliefs in der vorherigen Ausführungsform einstückig mit dem Kastengrundkörper 10 ausgebildet und im ersten Werkzeug durch Spritzgießen aus Kunststoff hergestellt. Das zweite Relief für den Schriftzug Premium auf der anderen Seite des Kastengrundkörpers 10 ist hierbei nicht als erhabenes Relief ausgebildet sondern durch im Kunststoffgrundkörper 10 aus dem ersten Kunststoff ausgebildete Vertiefungen, die sozusagen das Negativ eines erhabenen Schriftzuges darstellen. Diese Vertiefungen des Schriftzugs Premium werden hierbei mit dem zweiten Kunststoff wiederum nach Umsetzen des Kastengrundkörpers 10 in eine zweite Werkzeugform angespritzt, sodass sich die aus Fig. 17 ersichtliche Gestaltung der Innenseite des Handgriffes 8 mit einer hier wiederum bündigen Außenfläche bzgl. des zweiten und des ersten Kunststoffs ergibt. Der Kastengrundkörper 10 selbst ist aus Fig. 18 ersichtlich, aus der sich auch recht deutlich die Vertiefungen 36 für den Schriftzug Premium ergeben, die hier durch Öffnungen im Kastengrundkörper gebildet sind.

Auch das erhabene Relief auf der anderen Wandseite des Kastengrundkörpers 10 mit dem Schriftzug Schoeller, wieder einstückig gebildet aus dem Kastengrundkörper 10, ist aus Fig. 18 deutlich ersichtlich. Ebenso aus Fig. 18 sind mit Abstand angeordnete Längsrippen 38 ersichtlich, die hier optional parallel zum oberen und unteren Längsrand des Handgriffs bzw. des Kastengrundkörpers 10 im Bereich des Handgriffes verlaufen, was nicht zwingend ist, vielmehr könnte die Verrippung diagonal, vertikal, kreuzweise oder dergleichen vorgesehen sein. Diese verbinden das erhabene Relief mit dem Schriftzug Schoeller einstückig mit dem Kastengrundkörper 10 und bilden dahinter Freiräume für den Fluss der Kunststoffschmelze des zweiten Kunststoffkörpers 12, sodass dieser sowohl spaltfrei das erhabene Relief einkammern kann und dadurch auch Überbrückungskanäle für die Befüllung der inselartigen Abschnitte mit dem zweiten Kunststoff bildet und zugleich auch die Vertiefungen 36, die hier durch Öffnungen im Kastengrundkörper 10 gebildet sind, mit dem zweiten Kunststoff 12 füllt, sodass sich dann die aus den Fig. 16 und 17 ersichtliche Gestaltung des Handgriffes bzw. allgemein eines Bereiches des Kastens 1 ergibt. Die hier als durchgehende Öffnungen ersichtlichen Vertiefungen 36 nach Fig. 18 können anders als die dargestellten durchgehenden Öffnungen auch als sozusagen "sackartige" Vertiefungen ausgestaltet sein, also nicht durch den Kastengrundkörper 10 durchgehend, wobei dann entsprechende Überbrückungskanäle für die Füllung der Vertiefungen vorgesehen sind.

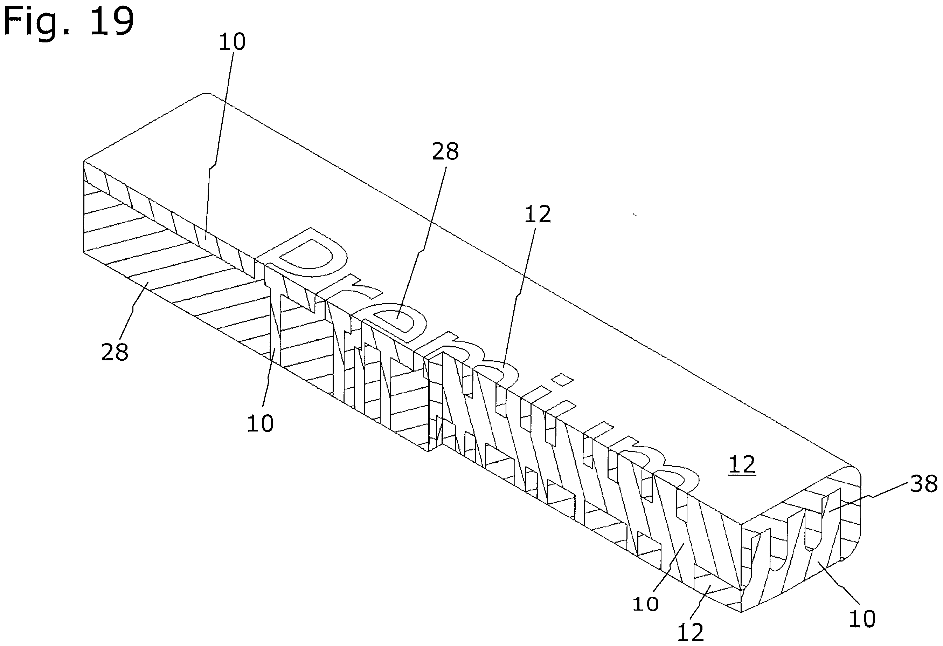

Fig. 19 zeigt schließlich einen Längsschnitt entsprechend Fig. 13 zur Darstellung der Innenseite mit dem Schriftzug Premium. Aus Fig. 19 sind auch sehr gut entsprechende Längsrippen 38 an Kunststoffgrundkörper 10 ersichtlich. Dadurch ergibt sich eine gute Verzahnung zwischen dem ersten und dem zweiten Kunststoff 1 und 12. Zweckmäßigerweise erstrecken sich diese Längsrippen über den gesamten aufgespritzten Bereich für den zweiten Kunststoff 12, was aber wiederum keinesfalls zwingend, vielmehr zweckmäßig ist.

## Patentansprüche

1. Kasten, insbesondere Flaschenkasten in Zwei-Komponenten-Bauweise mit einem Kastenboden und vier Seitenwänden (2 bis 5), mit einem Kastengrundkörper (10) aus einem ersten Kunststoff und mindestens einem ersten Relief (22) auf mindestens einer ersten Wandseite (32) von mindestens einer Seitenwand (2 bis 5), welches Relief (22) aus dem ersten Kunststoff geformt ist und gegenüber der dieses erste Relief unmittelbar umgebenden Wandseite (32) des Kastengrundkörpers erhaben ausgebildet ist und aus mindestens einem graphischen Bestandteil, vorzugsweise aus mehreren Buchstaben als graphische Bestandteile zur Bildung mindestens eines Schriftzuges ausgebildet ist, wobei das erste Relief von einem zweiten Kunststoff (12) umschlossen ist, der auf die das erste Relief (22) aufweisende erste Wandseite (32) aufgespritzt ist, wobei der zweite Kunststoff vorzugsweise eine unterschiedliche Farbgebung gegenüber dem ersten Kunststoff aufweist und wobei mindestens ein graphischer Bestandteil des ersten Reliefs (22) mindestens einen Abschnitt (28) umschließt der von mindestens einem Abschnitt des ersten Reliefs (22) vollständig umrahmt ist, wobei dem ersten Relief (22) gegenüberliegend auf der zweiten Wandseite (34) des Kastengrundkörpers (10) derselben Seitenwand (2 bis 5) ein zweites Relief (24) vorgesehen ist, wobei das zweite Relief auf der zweiten Wandseite (34) derart mit dem ersten Relief (22) auf der ersten Wandseite (32) ausgerichtet ist, dass jeder von diesem ersten Relief (22) umrahmte Abschnitt (28) mit der gegenüberliegenden zweiten Relief (24) aufweisenden Wandseite durch mindestens einen Überbrückungskanal (30) verbunden ist, wobei jeder Überbrückungskanal (30) schmelzleitfähig für einen Durchfluss von Kunststoffschmelze ausgelegt ist, wobei jeder Überbrückungskanal (30) durch die Ausrichtung beider Reliefs, in Bezug auf die Schmelzleitfähigkeit für den Durchfluss einer Kunststoffschmelze blockierfrei gehalten ist, wobei das erste und das zweite Relief (22, 24) in Bereichen der mindestens einen Seitenwand (2 bis 5) vorgesehen sind, die durch zwei Ausnehmungen (20) gebildet sind, und wobei das erste Relief (22) (22, 24) vom Boden von einer von diesen Ausnehmungen (20) vorsteht und wobei der Querschnitt durch den die Ausnehmungen (20) aufweisenden Bereiche unter Berücksichtigung der beidseitig der Wand vorgesehenen Begrenzungsschultern, insbesondere Stegschenkel, ein Doppel-T-Formprofil aufweist mit einem zentralen Steg (16) und beidseitig abkragenden Schultern bzw. Stegschenkeln (18).

2. Kasten nach Anspruch 1, **dadurch gekennzeichnet, dass** der durch die Ausnehmung (20) für die Reliefanordnung gebildete Bereich bandartig ausgebildet ist und zwar vorzugsweise parallel zum oberen Kastenrand, insbesondere am oberen Kastenrand, in Kastenmitte und/oder am unteren Kastenrand angeordnet ist.

3. Kasten nach Anspruch 2, **dadurch gekennzeichnet, dass** der bandartige Bereich sich über die gesamte Länge der entsprechenden Seitenwand (2 bis 5) erstreckt, insbesondere kastenumlaufend ausgebildet ist.

4. Kasten nach einem der vorhergehenden Ansprüche, **dadurch gekennzeichnet, dass** die Ausnehmung (20) für die erhabene Reliefausbildung (22, 24) zumindest auf zwei gegenüberliegenden Seiten (32, 34) des Kastengrundkörpers (10) insbesondere am oberen und unteren Rand, jeweils durch zumindest eine gleich hohe Schulter, insbesondere in Form von Stegschenkeln (18) begrenzt ist, und die von der Ausnehmung vorstehende Höhe der erhabenen Reliefausbildung vorzugsweise die gleiche Höhe wie die mindestens eine Schulter bzw. Stegschenkel aufweist, derart dass die Schultern bzw. Stegschenkel und die oberen Reliefränder miteinander bündig sowie bündig mit der Oberfläche des in die Ausnehmung eingespritzten zweiten Kunststoffes (12) sind, derart, dass im Bereich der Ausnehmung eine ebene Außenfläche gebildet ist.

5. Kasten nach einem der vorhergehenden Ansprüche, **dadurch gekennzeichnet, dass** die erhabene Reliefausbildung jeweils beidseits der Seitenwand (2 bis 5) vorgesehen ist.

6. Kasten nach einem der vorhergehenden Ansprüche, **dadurch gekennzeichnet, dass** das erste und zweite Relief (22, 24) aus einer Abfolge von grafischen Bestandteilen in Form von Buchstaben gebildet sind und das Buchstabenrelief beidseits der Seitenwand auf gleicher Höhe und/oder im Wesentlichen in gleicher Längserstreckung ausgebildet sind.

7. Kasten nach einem der vorhergehenden Ansprüche, **dadurch gekennzeichnet, dass** die grafischen Bestandteile, insbesondere Buchstaben, der Reliefs (22, 24) beidseits der Kasenseitenwand im Wesentlichen in überlappender Anordnung vorgesehen sind.

8. Kasten nach einem der vorhergehenden Ansprüche, **dadurch gekennzeichnet, dass** der erste Kunststoff und der zweite Kunststoff im Bereich der Reliefausbildung und der Begrenzungswände der Ausnehmung (20) spaltfrei aneinander anschließend ausgebildet sind, derart, dass eine trennscharfe Anordnung und stabile Verankerung infolge der Umschließung der erhabenen Reliefausbildung(en) durch den zweiten Kunststoff gebilqet ist.

9. Kasten nach einem der vorhergehenden Ansprüche, **dadurch gekennzeichnet, dass** der Überbrückungskanal (30) mit rundem oder ovalem Querschnitt, insbesondere mit kreisförmigem Querschnitt ausgebildet ist.

10. Kasten nach einem der vorhergehenden Ansprüche, **dadurch gekennzeichnet, dass** die erhabenen Reliefausbildungen (22, 24) durch vorspringende stegartige Rippen (26) gebildet sind, die innerhalb des Formwerkzeugs für das Einspritzen des zweiten Kunststoffs (12) Stützglieder bilden.

11. Kasten nach einem der vorhergehenden Ansprüche, **dadurch gekennzeichnet, dass** die Länge der Stegschenkel (18) des Doppel-T-Formprofils im Wesentlichen der Dicke des zentralen Stegs (16) entspricht, durch den sich mindestens ein Überbrückungskanal (30) erstreckt.

12. Kasten nach einem der vorhergehenden Ansprüche, **dadurch gekennzeichnet, dass** sich der bzw. die Überbrückungskanäle (30) senkrecht oder schräg durch den zentralen Steg bzw. den Kastengrundkörper (10) erstrecken.

13. Kasten nach einem der vorhergehenden Ansprüche, **dadurch gekennzeichnet, dass** der Kastengrundkörper (10) im Bereich der Reliefs (22, 24), insbesondere der Reliefvertiefungen durch Rippen (38) versteift ist, die vorzugsweise längs verlaufend parallel zum oberen Kastenrand angeordnet sind und an denen vorzugsweise das gegenüberliegend der Reliefvertiefung (36) angeordnete erhabene Relief einstückig angebunden ist.

## Claims

1. A crate, in particular a bottle crate with a two-component construction with a crate bottom and four side walls (2 to 5), with a crate base body (10) out of a first plastic material and at least one first relief (22) on at least one first wall side (32) of at least one side wall (2 to 5), the relief (22) being configured out of the first plastic material, and towards which side wall, the wall side (32) of the crate base body, which encloses this first relief, is raised and is configured of at least one graphic component, preferably of a number of letters as graphic components for forming at least one lettering, with the first relief being enclosed by a second plastic material (12) which is sprayed on the first wall side (32) containing the first relief (22), with the second plastic material preferably comprising a different colouring compared with the first plastic material and with at least one graphic component of the first relief (22) enclosing at least a section (28), which is completely framed by at least one section of the first relief (22), with a second relief (24) being provided opposite to the first relief (22) at the second wall side (34) of the crate base body (10) of the same side wall (2 to 5), with the second relief at the second wall side (34) being aligned with the first relief (22) at the first wall side (32) such that each section (28) which is framed by this first relief (22) is connected with the opposite wall side which comprises the second relief (24) by at least one bridging channel (30), wherein each bridging channel (30) is configured so that it can be conductive for the passage of a plastic melt, each bridging channel (30) being kept unblocked with respect to the conductibility for melt for the passage of a plastic melt by aligning both reliefs, wherein the first and the second relief (22, 24) are provided in sections of the at least one side wall (2 to 5), which are formed by two recesses (20) and wherein the first relief (22) protrudes from the bottom of one of these recesses (20) and wherein the cross section, through the sections comprising the recesses, include, under consideration of the two limiting shoulders, particularly frame legs, provided at both sides of the wall, a double T form profile with a central leg (16) and shoulders or frame legs (18) protruding at both sides.

2. The crate according to claim 1, **characterized in that** the section which is formed by the recesses (20) for the arrangement of the relief is configured ribbon-type preferably parallel with respect to the upper crate edge, in particular at the upper crate edge, in the crate center and/or at the lower crate edge.

3. The crate according to claim 2, **characterized in that** the ribbon-like section extends over the complete length of the corresponding side wall (2 to 5), and is in particular configured circumferentially around the crate.

4. The crate according to one of the preceding claims, **characterized in that** the recess (20) for the raised relief configuration (22, 24) is limited at least at two opposite sides (32, 34) of the crate base body (10) particularly at the upper and lower edge, by at least an equally high shoulder, in particular in the form of frame legs (18), and that the height of the raised relief configuration which protrudes from the recess preferably has the same height as the at least one shoulder or frame leg, such, that the shoulders or frame legs and the upper relief edges are flush with one another as well as flush with the surface of the second plastic material (12) that is injected into the recess, such, that in the area of the recess, a smooth outer surface is formed.

5. The crate according to one of the preceding claims, **characterized in that**
the raised relief configuration is provided respectively at both sides of the side wall (2 to 5).

6. The crate according to one of the preceding claims, **characterized in that**
the first and second relief (22, 24) are formed by a sequence of graphic components in the form of letters and that the letter relief is provided at both sides of the side wall at the same height and/or essentially in the same longitudinal extension.

7. The crate according to one of the preceding claims, **characterized in that**
the graphic components, in particular letters, of the reliefs (22, 24) are provided at both sides of the crate side wall essentially in an overlapping arrangement.

8. The crate according to one of the preceding claims, **characterized in that**
in the area of the relief configuration and the limiting walls of the recess (20), the first plastic material and the second plastic material are configured such that they attach one another without any gap, such, that a selective arrangement and stable anchorage due to the enclosure of the raised relief configuration(s) by the second plastic material is formed.

9. The crate according to one of the preceding claims, **characterized in that**
the bridging channel (30) is configured with, a round or oval cross section, in particular with a circular cross section.

10. The crate according to one of the preceding claims, **characterized in that**
the raised relief configurations (22, 24) are formed by protruding leg-like rips (26), which form supporting elements within the forming tool for the injection of the second plastic material (12).

11. The crate according to one of the preceding claims, **characterized in that**
the length of the frame leg (18) of the double T form profile essentially equals the thickness of the central leg (16), through which at least one bridging channel (30) extends.

12. The crate according to one of the preceding claims, **characterized in that**
the bridging channel or channels (30) extend vertically or diagonally through the central leg or the crate base body (10), respectively.

13. The crate according to one of the preceding claims, **characterized in that**
the crate base body (10) is stiffened by means of rips (38) in the area of the reliefs (22, 24), in particular of the relief impressions, with the rips preferably being arranged lengthwise running in parallel to the upper crate edge and to which rips preferably the raised relief which lies opposite to the relief impression (36) is integrally connected.

## Revendications

1. Caisse, notamment caisse à bouteilles de construction à deux composants, comportant un fond de caisse et quatre parois latérales (2 à 5), comportant un corps de base de caisse (10) constitué d'une première matière plastique et comportant au moins un premier relief (22) sur au moins un premier côté (32) de paroi d'au moins une paroi latérale (2 à 5), lequel relief (22) est formé à partir de la première matière plastique et lequel, par rapport au côté (32) de paroi du corps de base de caisse, entourant directement ce premier relief (22), est réalisé de manière saillante et est réalisé à partir d'au moins un composant graphique, de préférence à partir de plusieurs lettres en tant que composants destinés à former au moins un logo, dans laquelle le premier relief est enfermé par une deuxième matière plastique (12) qui est injectée sur le premier côté (32) de paroi présentant le premier relief (22), dans laquelle la deuxième matière plastique présente de préférence une coloration différente par rapport à la première matière plastique, et dans laquelle au moins un composant graphique du premier relief (22) enferme au moins une section (28) qui est entièrement encadrée par au moins une section du premier relief (22), dans laquelle un deuxième relief (24) est ménagé à l'opposé du premier relief (22) sur le deuxième côté (34) de paroi du corps de base de caisse (10) de la même paroi latérale (2 à 5), dans laquelle le deuxième relief est orienté sur le deuxième côté (34) de paroi de telle manière avec le premier relief (22) placé sur le premier côté (32) de paroi que chaque section (28) encadrée par ce premier relief (22) est reliée au côté de paroi opposé présentant le deuxième relief (24) par au moins un canal de traversée (30), dans laquelle chaque canal de traversée (30) est conçu de manière à conduire des masses fondues pour un écoulement de matières plastiques fondues, dans laquelle chaque canal de traversée (30), en raison de l'orientation des deux reliefs en ce qui concerne la conductibilité des masses fondues, est maintenu de manière anti-bloquante pour l'écoulement de matières plastiques en fusion, dans laquelle le premier et le deuxième reliefs (22, 24) sont ménagés dans des zones de l'au moins une paroi latérale (2 à 5), qui sont formées par deux évidements (20), et dans laquelle le premier relief (22) fait saillie du fond de l'un de ces deux évidements (20), et dans laquelle la section transversale à travers la zone présentant les évidements (20), en tenant compte des épaulements de délimitation ménagés de chaque côté de la paroi, notamment des branches d'ailette, présente un profil en forme de double T avec une ailette centrale (16) et des épaulements, respectivement des branches d'ailette (18), faisant saillie de chaque côté.

2. Caisse selon la revendication 1, **caractérisée en ce que** la zone formée par l'évidement (20) pour la disposition en relief est réalisée en forme de bande et est disposée de préférence parallèlement au bord de caisse supérieur, notamment sur le bord de caisse supérieur, en milieu de caisse et/ou sur le bord de caisse inférieur.

3. Caisse selon la revendication 2, **caractérisée en ce que** la zone en forme de bande s'étend sur toute la longueur de la paroi latérale correspondante (2 bis 5), notamment **en ce qu'**elle est réalisée de manière périphérique autour de la caisse.

4. Caisse selon l'une quelconque des revendications précédentes, **caractérisée en ce que** l'évidement (20) pour la réalisation saillante des reliefs (22, 24) est limité, au moins sur deux côtés opposés (32, 34) du corps de base de caisse (10), notamment sur le bord supérieur et le bord inférieur, respectivement par au moins un épaulement de même hauteur, notamment sous forme de branches d'ailette (18), et **en ce que** la hauteur, faisant saillie de l'évidement, de la formation saillante des reliefs présente de préférence la même hauteur que l'au moins un épaulement, respectivement branche d'ailette, de sorte que les épaulements, respectivement branches d'ailette, et les bords supérieurs des reliefs sont affleurés les uns par rapport aux autres et affleurés avec la surface de la deuxième matière plastique (12) injectée dans l'évidement de manière à ce qu'une surface extérieure plane soit formée dans la zone de l'évidement.

5. Caisse selon l'une quelconque des revendications précédentes, **caractérisée en ce que** la formation saillante des reliefs est respectivement ménagée de chaque côté de la paroi latérale (2 à 5).

6. Caisse selon l'une quelconque des revendications précédentes, **caractérisée en ce que** le premier et le deuxième reliefs (22, 24) sont formés par une séquence de composants graphiques sous forme de lettres et **en ce que** le relief de lettres est réalisé de chaque côté de la paroi latérale à la même hauteur et/ou essentiellement dans la même étendue longitudinale.

7. Caisse selon l'une quelconque des revendications précédentes, **caractérisée en ce que** les composants graphiques, notamment les lettres, des reliefs sont ménagés de chaque côté de la paroi latérale de caisse en disposition essentiellement chevauchante.

8. Caisse selon l'une quelconque des revendications précédentes, **caractérisée en ce que** la première matière plastique et la deuxième matière plastique sont réalisées en se raccordant sans espace l'une par rapport à l'autre au niveau de la formation des reliefs et des parois de délimitation de l'évidement (20), de manière à ce qu'une disposition distincte et une fixation stable soient formées suite au fait que la(les) formation(s) saillante(s) des reliefs est(sont) enfermée(es) par la deuxième matière plastique.

9. Caisse selon l'une quelconque des revendications précédentes, **caractérisée en ce que** le canal de traversée (30) est réalisé avec une section transversale ronde ou ovale, notamment avec une section transversale circulaire.

10. Caisse selon l'une quelconque des revendications précédentes, **caractérisée en ce que** les formations saillantes des reliefs sont formées par des nervures (26) en saillie en forme d'ailette, lesquelles forment des organes de soutien à l'intérieur du moule pour l'injection de la deuxième matière plastique (12).

11. Caisse selon l'une quelconque des revendications précédentes, **caractérisée en ce que** la longueur des branches d'ailette (18) du profilé en forme de double T correspond essentiellement à l'épaisseur de l'ailette centrale (16) à travers laquelle s'étend au moins un canal de traversée (30).

12. Caisse selon l'une quelconque des revendications précédentes, **caractérisée en ce que** le canal de traversée ou les canaux de traversée (30) s'étend(ent) perpendiculairement ou de manière oblique à travers l'ailette centrale, respectivement le corps de base de caisse (10).

13. Caisse selon l'une quelconque des revendications précédentes, **caractérisée en ce que** le corps de base de caisse (10) est renforcé par des nervures (38) au niveau zone des reliefs (22, 24), notamment reliefs négatifs, lesquelles nervures sont disposées de préférence en s'étendant longitudinalement parallèlement au bord de caisse supérieur et auxquelles de préférence le relief en saillie disposé à l'opposé du relief négatif (36) est relié d'une seule pièce.
